# FASCICULE DE BREVET EUROPEEN

(11) **EP 3 433 128 B1**
(45) Date de publication et mention de la délivrance du brevet: **22.01.2020**
(21) Numéro de dépôt: 17710777.8
(22) Date de dépôt: 14.02.2017
(51) Int. Cl.: B60N 2/60

(54) **SIEGE DE VEHICULE COMPORTANT UN DISPOSITIF DE GUIDAGE D'UNE SANGLE**
FAHRZEUGSITZ MIT EINER GURTFÜHRUNGSVORRICHTUNG
VEHICLE SEAT COMPRISING A BELT GUIDING DEVICE

(30) Priorité: 25.03.2016 FR 1652628
(43) Date de publication de la demande: 30.01.2019
(73) Titulaire: PSA Automobiles SA, 78300 Poissy (FR)
(72) Inventeur: AFROUG, Mohamed, 90160 BESSONCOURT (FR)
(86) Numéro de dépôt international: PCT/FR2017/050336
(87) Numéro de publication internationale: WO 2017/162938

(56) Documents cités:
- JP-A- 2008 018 771
- JP-A- 2013 139 190
- JP-U- H 075 892

## Description

La présente invention concerne un dispositif de guidage d'une sangle de commande traversant une paroi souple dont l'actionnement permet de débrayer un mécanisme apte à effectuer le déverrouillage d'un siège de ses glissières en vue d'assurer son coulissement ou son extraction du véhicule.

Dans l'état de la technique, nous connaissons le document FR2911305 qui décrit un mécanisme de verrouillage et déverrouillage de siège sur le plancher de l'habitacle d'un véhicule. Le mécanisme comprenant un levier de déverrouillage et des moyens d'actionnement du levier connectés mécaniquement audit levier de déverrouillage par une biellette afin d'une part d'actionner le déverrouillage du siège et le système de fixation de fermeture et d'autre part à assurer la préhension du siège. Le mécanisme est disposé sous la structure du siège, le levier étant préhensible depuis l'arrière du siège au niveau d'un élément de protection. Ce mécanisme constitue un ensemble rigide et ne traverse pas une paroi souple. Dans le dispositif de guidage suivant l'invention, la sangle de commande passe dans une fente pour traverser une paroi souple dont l'actionnement permet de débrayer un mécanisme apte à effectuer le déverrouillage d'un siège. On comprend que si le tirage de la sangle est effectué obliquement, le frottement de la lanière de la sangle dans la fente de la paroi souple peut progressivement la détériorer et la JPH075892U divulgue un siège de véhicule comportant un dossier et une assise solidaire d'un socle monté sur des glissières fixées sur le plancher et un moyen de commande de déverrouillage traversant une paroi souple masquant l'arrière du socle, le siège comprenant un dispositif de guidage rigide du moyen de commande.

Le but de l'invention est donc de proposer un dispositif de guidage de la lanière d'une sangle de tirage suivant une direction imparfaite, traversant une paroi souple à travers une fente dédiée, garantissant de conserver intact ladite paroi souple disposée derrière la structure de l'assise d'un siège, pour fournir une qualité perçue irréprochable.

A cet effet, la présente invention a pour objet un siège de véhicule comportant un dossier et une assise solidaire d'un socle monté sur des glissières fixées sur le plancher et un moyen de commande de déverrouillage traversant une paroi souple masquant l'arrière du socle, le siège comprenant un dispositif de guidage rigide du moyen de commande, placé derrière la paroi souple, le dispositif de guidage possède une structure formant une épingle comportant des branches de longueur égales.

Suivant une autre caractéristique avantageuse, la structure du dispositif de guidage est un fil cylindrique rigide.

Avantageusement, le fil cylindrique est métallique.

Selon une variante, les branches du dispositif de guidage sont parallèles au niveau du passage du moyen de commande.

Selon une autre variante, les branches se rapprochent l'une de l'autre vers leurs extrémités.

Selon une autre variante, l'extrémité des branches est introduite dans un perçage de la paroi latérale du socle et débouche sur l'autre face de la paroi latérale.

Avantageusement, l'extrémité des branches sont solidarisées à la paroi du socle par un cordon de soudure.

Selon une autre caractéristique, les branches sont positionnées horizontalement et situées dans un plan vertical.

Avantageusement, le dispositif de guidage est accolé à la paroi souple.

D'autres caractéristiques et avantages de l'invention apparaîtront clairement à la lecture de la description ci-après, donnée à titre indicatif en référence aux dessins annexés dans lesquels:
- La figure 1 est une vue arrière en perspective dans l'habitacle d'un véhicule montrant le dossier des sièges comportant des sangles dont la lanière traverse une paroi souple ;
- La figure 2 est une vue d'ensemble schématique de profil montrant l'implantation du dispositif de guidage d'une sangle dans un espace de siège arrière, monté dans l'habitacle d'un véhicule, suivant l'invention ;
- La figure 3 est une vue en perspective montrant l'arrière de la structure de l'assise d'un siège démuni de sa paroi souple comportant un dispositif de guidage d'une sangle suivant l'invention ;
- La figure 4 est une vue en perspective partielle agrandie de trois quart avant montrant le dispositif de guidage d'une sangle suivant l'invention ;
- La figure 5 est une vue en perspective partielle agrandie de l'arrière du dispositif de guidage d'une sangle montrant sa fixation sur la structure du siège, suivant l'invention.

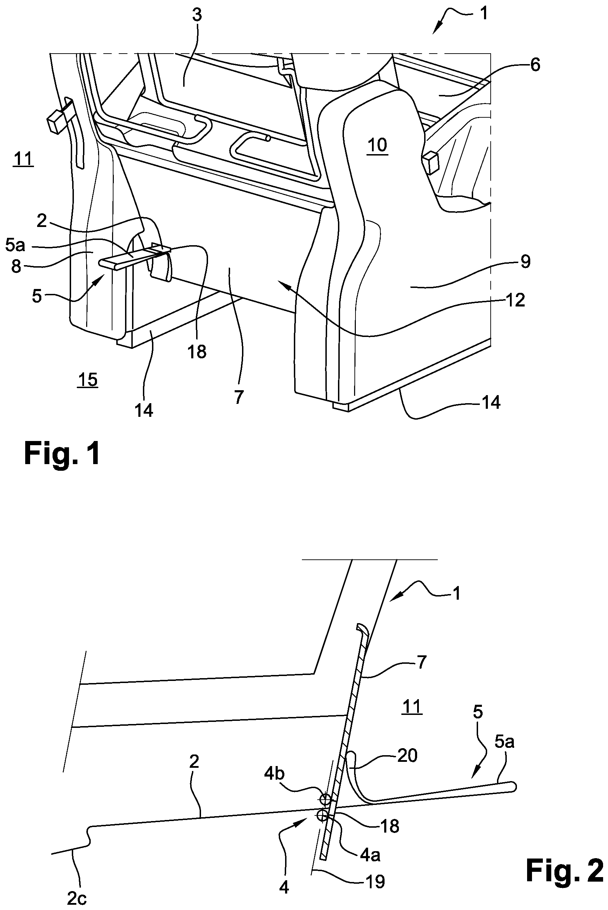

La figure 1 est une vue arrière en perspective de l'habitacle 11 d'un véhicule montrant le dossier 3 et l'assise 6 des sièges 1 comportant un moyen de commande 5. Le moyen de commande 5 est constitué d'une sangle 5a prolongée par une lanière 2. Le siège 1 comprend un socle 12 constituée de deux parois latérales 8, 9 recouvertes de garnitures 10 et reliées entre elles par des éléments tubulaires (non visible) permettant d'assurer la tenue mécanique. Ce socle 12 est surmontée par une assise horizontale 6 et le dossier sensiblement vertical 3. L'arrière du socle 12 disposée entre les deux parois latérales 8, 9 est masquée par la paroi souple 7 de protection assurant une bonne qualité perçue. Le socle 12 comporte un mécanisme de guidage propre à coulisser dans des glissières 14 ménagées dans le plancher 15 du véhicule. Pour déplacer le siège 1 sur ses glissières 14 ou encore pour l'extraire du véhicule, les mécanismes de guidage sont déverrouillés. A cet effet, le moyen de commande 5 constitué de la sangle 5a prolongée par la lanière 2 est prévue à l'arrière du siège 1, la lanière 2 passant à travers une fente 18 de la paroi souple 7. Le tirage manuel de la sangle 5a de commande vers l'arrière permet de débrayer les mécanismes aptes à effectuer le déverrouillage du siège 1. On comprend que si le tirage de la sangle 5a est effectué obliquement, le frottement de la lanière 2 de la sangle 5a dans la fente 18 de la paroi souple 7 devrait progressivement la détériorer et la déchirer. Le débrayage des mécanismes permet soit de déplacer le siège 1 longitudinalement sur sa glissière 14, soit en vue de l'extraire du véhicule afin d'augmenter l'espace de stockage.

La figure 2 est une vue d'ensemble schématique agrandie de profil montrant l'implantation du dispositif de guidage 4 d'une sangle 5a dans un espace de siège 1 arrière, monté dans l'habitacle 11 d'un véhicule, suivant l'invention. La paroi souple 7 du siège 1 est représentée en coupe au niveau de la sangle 5a. La lanière 2 prolongeant la sangle 5a traverse la fente 18 ménagée dans la paroi souple 7 et le dispositif de guidage 4 symbolisé sous forme de deux branches cylindriques 4a, 4b pour se raccorder à l'autre extrémité 2c de la lanière 2 à un mécanisme de déverrouillage non représenté. Le dispositif de guidage 4 est rigide. Les deux branches 4a, 4b de sections cylindriques sont constituées sous forme de fils cylindrique 13 métallique sur laquelle la lanière 2 de la sangle 5a peut glisser librement sur la génératrice des branches 4a, 4b. Le dispositif de guidage 4 est accolé à la paroi souple 7 et le centre des branches cylindriques 4a, 4b est disposé sur un axe 19 parallèle à la paroi souple 7. On comprend que la fente 18 possède une largeur légèrement supérieur à l'entre axe des deux fils 13 de manière à ne pas effleurer la paroi souple 7, si la lanière 2 est actionnée obliquement. Un système de rappel automatique de la sangle 5a est prévu pour la replacer dans sa position initiale. A cet effet, une boucle 20 additionnelle de la lanière 2 vient en butée positive du fait de son épaisseur contre le fil 13 des branches 4a, 4b dont l'espace entre les génératrices est inférieure à l'épaisseur de la dite boucle 20.

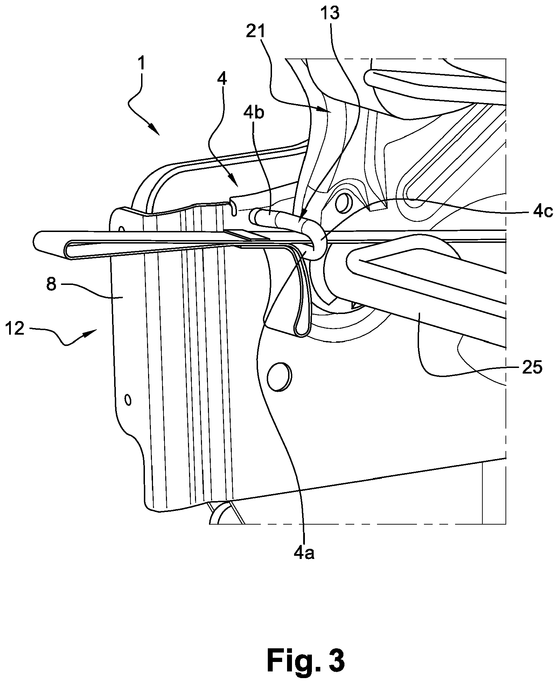

La figure 3 est une vue partielle en perspective montrant l'arrière du socle 12 de l'assise d'un siège 1 démuni de sa paroi souple 7 comportant un dispositif de guidage 4 d'une sangle 5a suivant l'invention. Le socle 12 comprend les parois latérales 8, 9 (visible figure 1) reliées entre elles par des éléments tubulaires 25 pour constituer un ensemble robuste. Ce socle 12 est surmonté par l'armature 21 de l'assise 13 du siège 1. Le dispositif de guidage 4 est constitué par un fil 13 en épingle comportant deux branches 4a, 4b dont les sections cylindriques sont identiques et reliées entre elles par une partie de branche courbée 4c de 180 degrés. La lanière 2 de la sangle 5a est introduite entre les branches 4a, 4b du dispositif de guidage 4. En particulier, les branches 4a, 4b sont parallèles entre elles au niveau du passage de la lanière 2 de la sangle 5a. L'extrémité des branches 4a, 4b vient se fixer dans la paroi latérale 8.

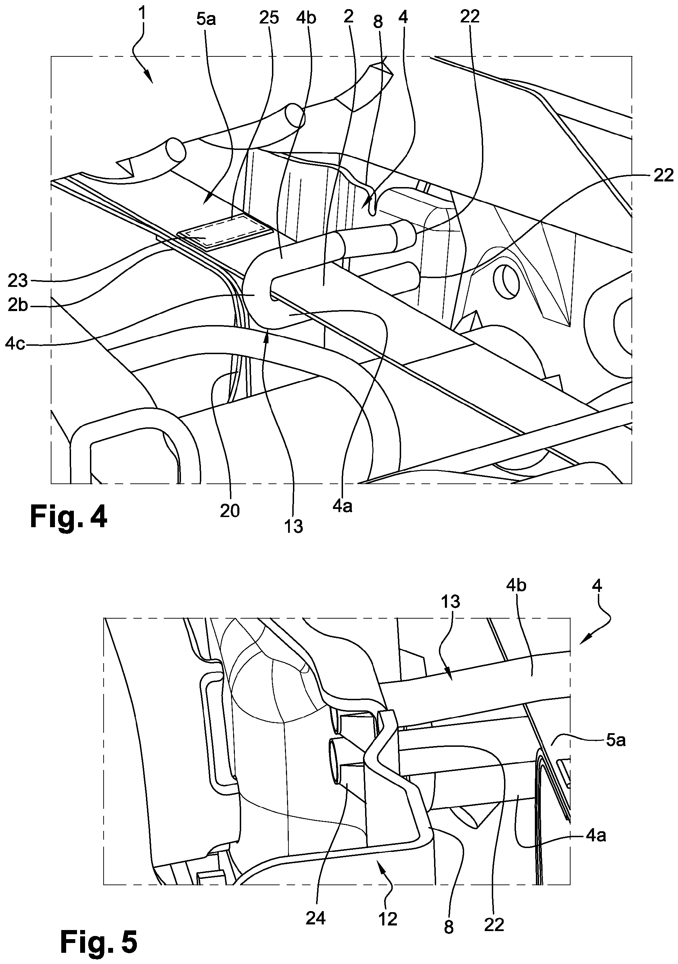

La figure 4 est une vue en perspective partielle agrandie de trois quart avant montrant le dispositif de guidage 4 d'une sangle 5a suivant l'invention, comprenant les deux branches 4a, 4b et la partie de branche courbe 4c formant une épingle afin d'éviter à la lanière 2 de se déplacer latéralement. La branche inférieure 4a est rectiligne tandis que la branche supérieure 4b est parallèle à la branche 4a au niveau du passage de la lanière 2 et au-delà se rapproche de la branche inférieure 4a pour se prolonger parallèlement afin que leurs extrémités soient introduites dans des ouvertures cylindriques 22 réalisées dans la paroi 8 pour leurs fixations. La boucle 20 est obtenue par la continuité de l'extrémité 5c de la sangle 5a obtenue à l'aide de la lanière 2 repliée sur elles même dont l'extrémité est repliée sur la lanière 2 après formation de la dite boucle 20, afin de fournir une triple épaisseur. Un renfort 23 de la largeur de la lanière 2 est prévu à la jonction de ces épaisseurs qui sont couseuses par des cordons résistants 25 entre elles pour générer un point de blocage de la sangle 5a dans le passage entre les branches 4a, 4b du dispositif de guidage 4.

La figure 5 est une vue en perspective partielle agrandie de l'arrière du dispositif de guidage 4 d'une sangle 5a montrant sa fixation sur le socle 12 du siège 1, suivant l'invention. Les extrémités des branches 4a, 4b sont introduites dans des ouvertures cylindriques 22 ajustées au diamètre du fil métallique 13, dans la paroi 8 du socle 12 du siège 1. Les extrémités des branches 4a, 4b sont en saillie sur la face opposée de la paroi 8. Un cordon 24 de soudure vient solidariser fermement l'extrémité des branches 4a, 4b du dispositif de guidage 4 sur la paroi 8 du socle 12 du siège 1.

## Revendications

1. Siège (1) de véhicule comportant un dossier (3) et une assise (6) solidaire d'un socle (12) monté sur des glissières (14) fixées sur le plancher (15) et un moyen de commande de déverrouillage traversant une paroi souple (7) masquant l'arrière du socle (12), **caractérisé en ce que** le siège (1) comprend un dispositif de guidage (4) rigide du moyen de commande (5), placé derrière la paroi souple (7), et **en ce que** le dispositif de guidage (4) possède une structure formant une épingle comportant des branches (4a, 4b) de longueur égales.

2. Siège (1) selon la revendication 1, **caractérisé en ce que** la structure du dispositif de guidage (4) est un fil cylindrique (13) rigide.

3. Siège (1) selon la revendication 2, **caractérisé en ce que** le fil cylindrique (13) est métallique.

4. Siège (1) selon la revendication 1, **caractérisée en ce que** les branches (4a, 4b) du dispositif de guidage (4) sont parallèles au niveau du passage du moyen de commande (5).

5. Siège (1) selon l'une quelconque des revendications 1 ou 4, **caractérisé en ce que** les branches (4a, 4b) se rapprochent l'une de l'autre vers leurs extrémités.

6. Siège (1) selon la revendication 5, **caractérisé en ce que** l'extrémité des branches (4a, 4b) est introduite dans un perçage (22) de la paroi latérale (8) du socle (12) et débouche sur l'autre face de la paroi latérale (8).

7. Siège (1) selon l'une quelconque des revendications 5 ou 6, **caractérisé en ce que** l'extrémité des branches (4a, 4b) est solidarisée à la paroi du socle (12) par un cordon de soudure (24) .

8. Siège (1) selon l'une quelconque des revendications 1 et 4 à 7, **caractérisé en ce que** les branches (4a, 4b) sont positionnées horizontalement et situées dans un plan vertical.

9. Siège (1) selon l'une quelconque des revendications 1 ou 2, **caractérisé en ce que** le dispositif de guidage (4) est accolé à la paroi souple (7).

## Patentansprüche

1. Fahrzeugsitz (1), der eine Rückenlehne (3) und eine Sitzfläche (6), die fest mit einem Sockel (12) verbunden ist, der auf Gleitschienen (14) montiert ist, die auf dem Fußboden (15) befestigt sind, und ein Entriegelungssteuermittel umfasst, das eine biegsame Wand (7), die die Rückseite des Sockels (12) abdeckt, durchquert, **dadurch gekennzeichnet, dass** der Sitz (1) eine starre Führungsvorrichtung (4) des Steuermittels (5) umfasst, die hinter der biegsamen Wand (7) platziert ist, und dass die Führungsvorrichtung (4) eine Struktur besitzt, die eine Nadel bildet, die Schenkel (4a, 4b) mit gleicher Länge umfasst.

2. Sitz (1) nach Anspruch 1, **dadurch gekennzeichnet, dass** die Struktur der Führungsvorrichtung (4) ein starrer zylindrischer Draht (13) ist.

3. Sitz (1) nach Anspruch 2, **dadurch gekennzeichnet, dass** der zylindrische Draht (13) metallisch ist.

4. Sitz (1) nach Anspruch 1, **dadurch gekennzeichnet, dass** die Schenkel (4a, 4b) der Führungsvorrichtung (4) im Bereich der Passage des Steuermittels (5) parallel sind.

5. Sitz (1) nach einem der Ansprüche 1 und 4, **dadurch gekennzeichnet, dass** sich die Schenkel (4a, 4b) einander zu ihren Enden hin nähern.

6. Sitz (1) nach Anspruch 5, **dadurch gekennzeichnet, dass** das Ende der Schenkel (4a, 4b) in eine Bohrung (22) der Seitenwand (8) des Sockels (12) eingeführt ist und auf der anderen Fläche der Seitenwand (8) mündet.

7. Sitz (1) nach einem der Ansprüche 5 oder 6, **dadurch gekennzeichnet, dass** das Ende der Schenkel (4a, 4b) fest mit der Wand des Sockels (12) durch eine Schweißnaht (24) verbunden ist.

8. Sitz (1) nach einem der Ansprüche 1 und 4 bis 7, **dadurch gekennzeichnet, dass** die Schenkel (4a, 4b) horizontal positioniert sind und in einer vertikalen Ebene liegen.

9. Sitz (1) nach einem der Ansprüche 1 oder 2, **dadurch gekennzeichnet, dass** die Führungsvorrichtung (4) an die biegsame Wand (7) angefügt ist.

## Claims

1. A vehicle seat (1) comprising a backrest (3) and a seat pan (6) that is secured to a base (12) which is mounted on sliding rails (14) attached to the floor (15), and an unlocking control means which penetrates a flexible wall (7) covering the rear of the base (12), **characterized in that** the seat (1) includes a rigid guiding device (4) for the control means (5), said guiding device being located behind the flexible wall (7), and **in that** the guiding device (4) has a structure forming a pin comprising branches (4a, 4b) of equal length.

2. The seat (1) according to Claim 1, **characterized in that** the structure of the guiding device (4) is a rigid cylindrical wire (13).

3. The seat (1) according to Claim 2, **characterized in that** the cylindrical wire (13) is metallic.

4. The seat (1) according to Claim 1, **characterized in that** the branches (4a, 4b) of the guiding device (4) are parallel at the level of the passage of the control means (5).

5. The seat (1) according to any one of Claims 1 or 4, **characterized in that** the branches (4a, 4b) come close to one another towards their ends.

6. The seat (1) according to Claim 5, **characterized in that** the end of the branches (4a, 4b) is introduced in a bore (22) of the lateral wall (8) of the base (12) and comes out on the other face of the lateral wall (8) .

7. The seat (1) according to any one of Claims 5 or 6, **characterized in that** the end of the branches (4a, 4b) is secured to the wall of the base (12) by a weld bead (24) .

8. The seat (1) according to any one of Claims 1 and 4 to 7, **characterized in that** the branches (4a, 4b) are positioned horizontally and situated in a vertical plane.

9. The seat (1) according to any one of Claims 1 or 2, **characterized in that** the guiding device (4) is coupled to the flexible wall (7).
